# EUROPEAN PATENT APPLICATION

(11) **EP 1 441 235 A2**
(43) Date of publication of application: **28.07.2004**
(21) Application number: 04250350.8
(22) Date of filing: 22.01.2004
(51) Int. Cl.: G01S 5/02, G01S 1/02

(54) **Location system**

(30) Priority: 22.01.2003 GB 0301504
(71) Applicant: Avon and Somerset Police Authority, Portishead, Bristol BS20 8QJ (GB)
(72) Inventor: Harris, John, Bristol BS34 8XN (GB)
(74) Representative: O'Connell, David Christopher

(57) **Abstract**

A location system comprises a remote device (3) which is attached to an object being located, for example a laptop computer (1). The location of the object is first determined to be within a first area (4) using cellular communication signals emitted by the remote device (3). For example, cellular triangulation techniques and/or cell location information can be used for this purpose. An operator carrying a mobile tracking device (5) then moves to the vicinity of the first area (4). The location of the remote device (3) within the first area (4) is determined by detecting a signal emitted by a radio beacon on the remote device (3). The remote device may be activated and/or deactivated using a paging unit in order to save power consumption.

## Description

### Field of the invention

The present invention relates to a location system for determining the location of an object or person.

### Background to the invention

There are a number of location systems currently in use for determining the position of stolen or missing objects. For example, there are numerous different vehicle location systems available which provide stolen vehicle tracking and/or locating services. US6,169,497 discloses a typical system in which a number of mobile tracking units, for example fitted in police cars, allow the police to track and locate a stolen vehicle. These tracking devices tend to use real time location techniques, for example using satellite positioning systems (GPS) to locate the position of a stolen vehicle.

Such systems have a number of drawbacks which render them unsuitable for use in detecting the location of other objects, in particular smaller objects such as laptop computers, office equipment, household electrical items and bicycles for example. This is because systems employing GPS techniques tend to require large transmitters, thus requiring large power sources. In addition, GPS receivers require antenna that can "see" the sky, thus making them impractical for use in locating smaller items.

GPS systems also suffer from the disadvantage that reception is required from three or more satellites in order to locate the position of an object. While this is suitable for use in detecting the location of a vehicle in which a satellite antenna can easily "see" the sky, GPS is not suited for use in the detection of smaller items, particularly items in which the antenna must be covert. Furthermore, GPS systems are not suited in applications where a stolen item may be concealed within a building, container or bag.

The aim of the invention is to provide a location system which does not suffer from the disadvantages mentioned above.

### Summary of the invention

According to the present invention, there is provided a location system for determining the location of an object, the location system comprising a remote device which, in use, is carried by the object being located, and a mobile tracking device which, in use, is carried by an operator, wherein:
the remote device comprises means for transmitting a first radio signal at an operating frequency of a cellular communications system, and means for transmitting a second radio signal at an operating frequency of a radio beacon; and
the mobile tracking device comprises a signal detector for detecting the second radio signal,
the location system further comprising means for determining the location of the remote device to within a first area using the first radio signal, and wherein the location of the remote device within the first area is determined using the signal detector of the mobile tracking device.

According to another aspect of the invention, there is provided a location system for determining the location of an object, the location system comprising:
a remote device which, in use, is attached to said object, the remote device comprising means for transmitting a first radio signal at a frequency corresponding to a cellular communication signal, and means for transmitting a second radio signal at a frequency corresponding to a radio beacon;
a mobile tracking device which, in use, is operated by an operator, the mobile tracking device comprising signal detector for detecting the second radio signal:
wherein the location of the remote device is determined to be within a first area using the first radio signal, and wherein the location of the remote device within the first area is determined using the signal detector of the mobile tracking device.

According to a further aspect of the present invention, there is provided a method of locating an object, the method comprising the steps of:
providing a remote device which, in use, is carried by the object being located, the remote device comprising means for transmitting a first radio signal at an operating frequency of a cellular communications system, and means for transmitting a second radio signal at the operating frequency of a radio beacon;
providing a mobile tracking device which, in use, is carried by an operator, the mobile tracking device comprising a signal detector for detecting the second radio signal;
determining the location of the remote device to within a first area using the first radio signal; and
determining the location of the remote device within the first area using the signal detector of the mobile tracking device.

### Brief description of the drawings

For a better understanding of the invention, and to show more clearly how it may be carried into effect, reference will now be made, by way of example, to the accompanying drawings in which:
Figure 1 shows an overview of the location system according to the present invention;
Figure 2 shows the remote device of Figure 1 in greater detail;
Figure 3 shows the mobile tracking device of Figure 1 in greater detail;
Figure 4 shows the steps involved in determining the location of an object in accordance with a preferred embodiment of the invention.

### Detailed description of a preferred embodiment of the invention

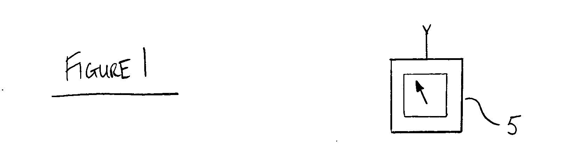

Figure 1 shows an overview of the locating system according to the present invention. A device to be protected, for example a laptop computer 1, carries a remote device 3 for enabling the location of the computer 1 to be determined. The remote device 3 comprises two forms of location detecting circuitry.

First, the remote device 3 comprises cellular communication means for enabling the position of the computer 1 to be located to within a first area 4 using signals received by base stations 7 of a cellular communications network 9. For example, if triangulation techniques are used, the computer 1 can be located to within an area of approximately 200 square metres.

The remote device 3 also comprises a radio beacon. Thus, once the position of the computer 1 has been located to within the first area 4 using the cellular communication means, the position of the computer 1 within the first area 4 is then determined using the signal emitted by the radio beacon. The signal emitted by the radio beacon of the remote device 3 is detected using a mobile tracking device 5.

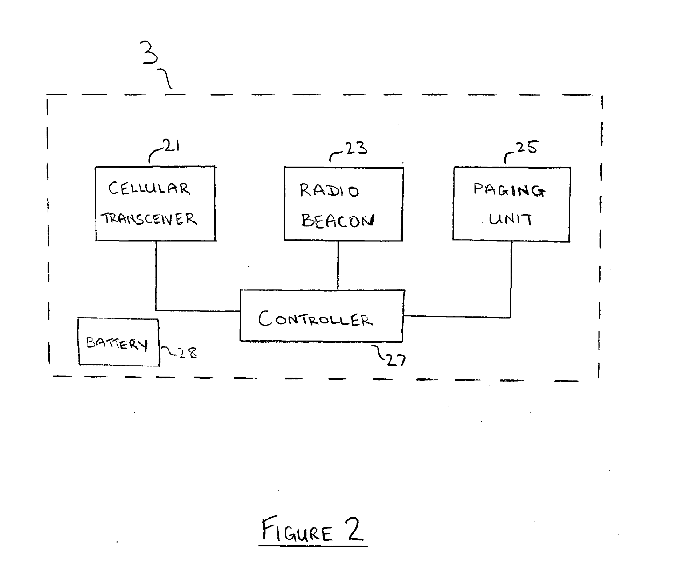

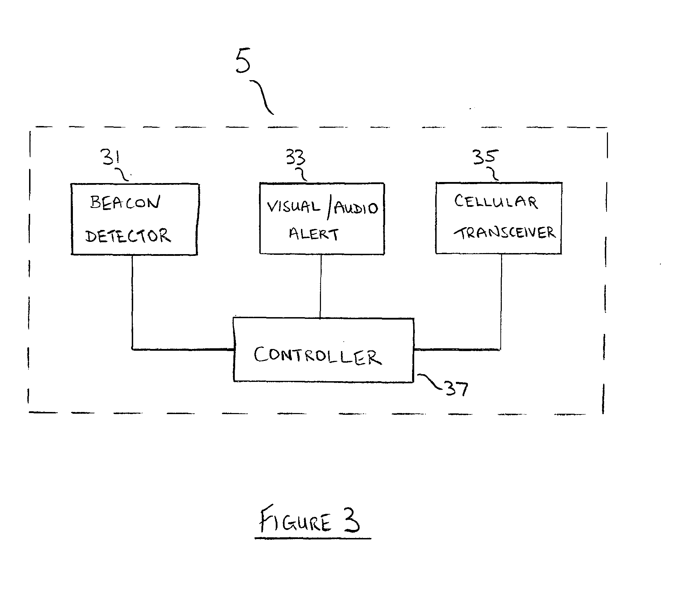

Further details of the location system, and in particular the remote device 3 and mobile tracking device 5 will now be given with reference to Figures 2 and 3.

Figure 2 shows a block diagram of the main components of the remote device 3 according to a preferred embodiment of the invention.

As mentioned above, the remote device 3 comprises cellular communication means 21 for enabling the position of the remote device 3 to be determined within a first area 4. Preferably the cellular communication means 21 is a cellular transceiver, but it will be readily evident to a person skilled in the art that the invention only requires the use of a cellular transmitter in order to operate in its basic form, i.e. to enable the location information to be determined by the cellular communications network 9.

The remote device 3 also comprises a radio beacon 23. Once the operator of the mobile tracking device 5 is within the vicinity of the first area 4, the signal transmitted by the radio beacon 23 is used to detect the location of the remote device 3. Preferably the radio beacon 23 operates at a frequency which is different from the operating frequency of the cellular transmitter, thereby avoiding the need to transmit on the cellular frequency band.

The frequency of the signal emitted by the radio beacon 23 is chosen such that detection is possible at a distance which is at least equal to the maximum distance within the first area 4. Preferably, the signal emitted by the radio beacon 23 is pulsed in order to save power consumption.

It is noted that, if space is a constraint, the cellular transmitter could also be used as the radio beacon 23. In such a system, the signal transmitted by the cellular transceiver is initially used by the cellular communication system to locate the remote device within a first area, and the cellular signal then used as the radio signal for detection by the mobile tracking device 5.

Operation of the remote device 3 is controlled by a controller 27, for example a microprocessor. The remote device 3 is self-powered by an integral battery 28.

Preferably, the remote device 3 also comprises a paging unit 25 for allowing the remote device 3 to be activated or deactivated from a remote location. The paging unit 25 detects a specific signal in a transmission from the communications network 9. The paging unit 25 allows the invention to overcome problems associated with the prior art, in which the detection circuitry must be permanently powered in case of a theft. The provision of a paging unit 25 enables the remote device 3 to remain in a "sleep mode" during normal use of the computer 1. However, when the computer 1 is stolen, the cellular communications network 9 can be used to send a paging signal to the paging unit 25, causing the remote device 3 to change from the sleep mode into an active mode. Once in the active mode, the controller 27 powers the transmitter of the cellular transceiver 21, thereby enabling the location of the remote device 3 (and hence the computer 1) to be determined by the communications network 9.

As mentioned above, a paging signal can be sent from the communications network 9 to the paging unit 25 in response to an operator being informed of the theft. Alternatively, the transmitter of the cellular transceiver 21 can be powered automatically in response to the computer being stolen, for example in response to a trip switch being activated, or the computer being unplugged from its main power supply.

The paging unit 25 can also be used to deactivate the remote device 3. For example, once the initial location of the remote device 3 has been determined to be within the first area 4, the communications network 9 can be used to send a paging signal to the paging unit 25, causing the controller 27 to place the remote device 3 into a sleep mode. This enables power to be conserved while the operator of the mobile tracking device 5 moves to the vicinity of the first area 4. Once the operator is in the vicinity of the first area 4, the communications network 9 is used to send a further paging signal to the paging unit 25, causing the remote device 3 to be activated once more. The operator then uses the mobile tracking device 5 to determine the location of the remote device 3, by detecting the signal emitted by the radio beacon 23.

The provision of being able to activate and deactivate the remote device 3 from the communications network 9 enables the life of the battery 28 to be preserved for longer periods.

Figure 3 shows the mobile tracking device 5 of figure 1 in greater detail. The mobile tracking device 5 comprises a beacon signal detector 31 for detecting the signal emitted by the radio beacon 23 of the remote device 3.

Using the information provided by the beacon signal detector 31, a controller 37 provides a visual and/or audible signal to the operator. The visual and/or audible signal acts as a direction finder, which provides an operator with a visual and/or audible indicator for guiding the operator towards the remote device 3 within the area 4.

For example, the mobile tracking device 5 may have a pointer for directing the operator in the correct direction within the area 4, based on signals received from two or more antennas provided in the beacon signal detector 31. The mobile tracking device 5 may also provide the operator with an audible signal for directing the operator towards the remote device 3.
For example, the locating device can have an audible signal which is loudest when the mobile tracking device 5 is pointing towards the remote device 3.

Alternatively, instead of using two or more antennas in the beacon signal detector 31, the signal strength of a signal received by a single antenna can be used to provide an indication of proximity to the remote device 3. The audible signal can vary in loudness depending on the proximity of the mobile tracking device to the remote device 3.

The mobile tracking device 5 therefore enables the operator to locate the position of the remote device 3 within the area 4.

Advantageously, the mobile tracking device 5 also comprises cellular communication means 35 for communicating with the cellular communications network 9. For example, once the location of the computer 1 is determined to be within the first area 4, this location information can be conveyed from the communications network 9 to the operator via the mobile tracking device 5, thereby enabling the operator to move to the vicinity of the first area 4. Once this information has been conveyed to the mobile tracking device 5, the communications network 9 preferably sends a paging signal to the remote device 3, instructing the remote device 3 to enter a sleep mode of operation.

The cellular communication means 35 of the mobile tracking unit 5 can also be used to transfer information from the operator to the communications network 9. For example, the cellular communication means 35 can be used by the operator to inform the communications network 9 that the mobile tracking device 5 is within the vicinity of the first area 4. Using this information, the communications network 9 can be used to send a paging signal to the remote device 3, instructing the remote device 3 to activate its radio beacon. The operator is then able to use the mobile tracking device 5 to home in on the location of the remote device 3, and hence the computer 1.

It is noted that communication via the communications network 9 can be transparent to the extent that the location system appears to operate under the sole control of the operator of the mobile tracking device 5. Signals sent from the mobile tracking device 5 can therefore be used to control the remote device 3. This is made possible, for example, by offering the service as a special service on a Service Switching Point of the communications network 9.

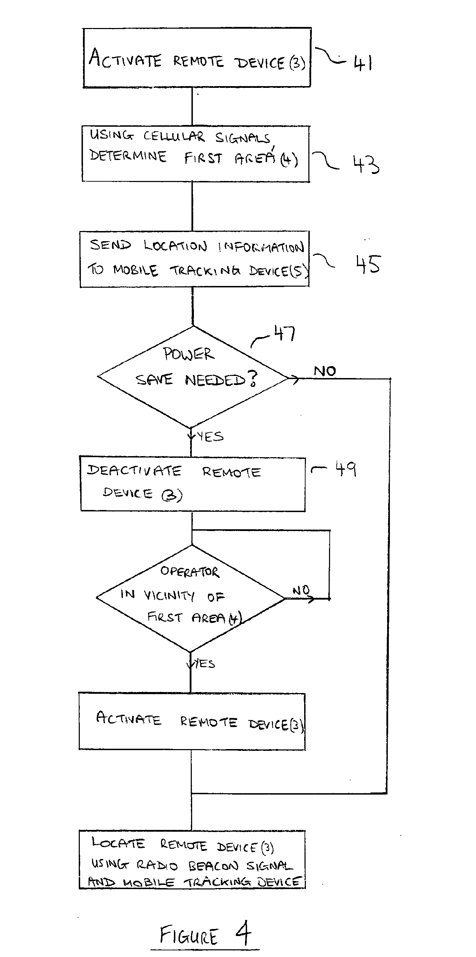

Figure 4 describes the steps involved in locating an object using the location system of the present invention.

The first step 41 is to activate the cellular communication means 21 of the remote device 3. As mentioned above, this can either be performed automatically in response to a theft, or in response to a specific instruction, for example a paging signal received by the paging unit 25 from the communications network 9.

Using the cellular signals transmitted by the remote device 3, the location of the remote device 3 is determined in step 43 to be within a first area 4.
This initial location information can be determined using a number of cellular location techniques, including triangulation in which the location is determined based on the signals received by three or more separate base stations 7.

Next, in step 45, this location information is conveyed to the operator, preferably via the mobile tracking device 5.

The location system also has the option, step 47, of saving power in the remote device 3 while the operator moves to the vicinity of the first area 4.

If required, the communications network 9 can send a paging signal to the remote device 3, causing the remote device 3 to enter a sleep mode, step 49. When it is determined in step 51 that the operator is within the vicinity of the first area 4, for example by the operator sending a cellular communication signal to the communications network 9, the communications network 9 sends a wake-up signal to the remote device 3 in step 53, causing the radio beacon of the remote device 3 to be activated.

The operator then locates the remote device 3 within the area 4, step 55, using the mobile tracking device 5.

The invention described above enables the position of a remote device to be detected without having the disadvantages associated with the prior art mentioned above.

It is noted that, although the description of the preferred embodiment has been discussed in relation to a laptop computer 1, it will be readily understood that the invention can also be used to track the location of other items, people or animals.

Although cellular triangulation techniques have been described for determining the location of the first area 4, other cellular techniques could also be used. For example, if used in a pico-cell environment, the home location register (HLR) and/or the visiting location register (VLR) of the cellular communication network could be used to determine the location of the remote device 3 to within its last registered pico-cell, the area defined by this pico-cell being the first area 4.

Preferably the remote device 3 forms a tamperproof, integral part of the device being protected. For example, the components of the remote device 3 can be integrated with the component parts of a computer 1, such that removal or disablement of the remote device 3 also causes the computer 1 to be disabled.

Alternatively, the remote device 3 can take the form of a removable IC or assembly, thereby enabling the remote device to be easily fitted to existing devices.

In the preferred embodiment, the remote device 3 has a paging unit 25 for allowing the remote device to be activated and/or deactivated by a remote source. The provision of a paging unit 25 is preferred since it allows the remote device 3 to lie dormant for many months, i.e. because the paging unit 25 requires less power than a cellular transceiver. However, in applications where power consumption is less of an issue, it is possible that the cellular transceiver can be placed in a standby mode when the remote device is lying dormant, and then switched to an operational mode when it is desired to locate the position of the remote device.

## Claims

1. A location system for determining the location of an object, the location system comprising a remote device which, in use, is carried by the object being located, and a mobile tracking device which, in use, is carried by an operator, wherein:
the remote device comprises means for transmitting a first radio signal at an operating frequency of a cellular communications system, and means for transmitting a second radio signal at an operating frequency of a radio beacon; and
the mobile tracking device comprises a signal detector for detecting the second radio signal,
the location system further comprising means for determining the location of the remote device to within a first area using the first radio signal, and wherein the location of the remote device within the first area is determined using the signal detector of the mobile tracking device.

2. A location system as defined in claim 1, wherein a cellular communications network is used to determine the location of the remote device to within the first area.

3. A location system as defined in claim 1 or 2, wherein the remote device further comprises means for automatically activating the first radio signal in response to the object being stolen.

4. A location system as defined in claim 1 or 2, wherein the remote device further comprises means for activating the first radio signal in response to a signal received from a cellular communications network.

5. A location system as claimed in any one of the previous claims, having means for deactivating the first radio signal in response to a signal received from a cellular communications network.

6. A location system as claimed in claim 4 or 5, wherein the remote device further comprises a paging unit for receiving activation/deactivation control signals from the cellular communications network.

7. A location device as claimed in any one of the previous claims, wherein the mobile tracking device further comprises cellular communication means for communicating with the cellular communications network.

8. A location system as claimed in claim 7, wherein the mobile tracking device comprises means for receiving location information from the cellular communications network, the location information identifying the location of the first area.

9. A location system as claimed in claim 7 or 8, wherein the mobile tracking unit comprises means for sending a signal to the cellular communication network, informing the cellular communications network that the mobile tracking device is within the vicinity of the first area.

10. A location system as claimed in any one of claims 2 to 9, wherein a cellular triangulation technique is used to determine the location of the remote device to within the first area.

11. A location system as claimed in any one of claims 2 to 9, wherein the home location register and/or visitor location register of a cellular network are used to determine the location of the remote device to within the first area.

12. A location system as claimed in any one of the preceding claims, wherein the circuit components of the remote device are integrally formed with circuit components of the object being protected.

13. A location system as claimed in any one of the preceding claims, wherein the mobile tracking device comprises means for providing a visual indication to the operator, for guiding the operator towards the remote device.

14. A location system as claimed in any one of the preceding claims, wherein the mobile tracking device comprises means for providing an audible signal to the operator, for guiding the operator towards the remote device.

15. A locating system as defined in any one of the preceding claims, wherein the remote device comprises means for pulsing the second radio signal in order to conserve battery power.

16. A locating system as claimed in any one of the preceding claims, wherein the signal detector of the mobile tracking device comprises two or more antennas.

17. A location system for determining the location of an object, the location system comprising:
a remote device which, in use, is attached to said object, the remote device comprising means for transmitting a first radio signal at a frequency corresponding to a cellular communication signal, and means for transmitting a second radio signal at a frequency corresponding to a radio beacon;
a mobile tracking device which, in use, is operated by an operator, the mobile tracking device comprising signal detector for detecting the second radio signal:
wherein the location of the remote device is determined to be within a first area using the first radio signal, and wherein the location of the remote device within the first area is determined using the signal detector of the mobile tracking device.

18. A method of locating an object, the method comprising the steps of:
providing a remote device which, in use, is carried by the object being located, the remote device comprising means for transmitting a first radio signal at an operating frequency of a cellular communications system, and means for transmitting a second radio signal at the operating frequency of a radio beacon;
providing a mobile tracking device which, in use, is carried by an operator, the mobile tracking device comprising a signal detector for detecting the second radio signal;
determining the location of the remote device to within a first area using the first radio signal; and
determining the location of the remote device within the first area using the signal detector of the mobile tracking device.

19. A method as defined in claim 18, further comprising the step of automatically activating the first radio signal in response to the object being stolen.

20. A method as claimed in claim 18, further comprising the step of activating the first radio signal in response to a signal received from a cellular communications network.

21. A method as claimed in any one of claims 18 to 20, further comprising the step of deactivating the first radio signal in response to a signal received from a cellular communications network.

22. A method as claimed in claim 21, wherein the first radio signal is deactivated after the step of determining the location of the remote device to within the first area using the first radio signal.

23. A method as claimed in any one of claims 20 to 22, wherein a paging unit is provided in the remote device for receiving activation/deactivation control signals from the cellular communications network.

24. A method as claimed in any one of claims 18 to 23, wherein cellular communication means are provided in the mobile tracking device for communicating with the cellular communications network.

25. A method as claimed in claim 24, wherein the mobile tracking device receives location information from the cellular communications network, the location information identifying the location of the first area.

26. A method as claimed in claim 24 or 25, wherein the mobile tracking unit sends a signal to the cellular communication network, informing the cellular communications network that the mobile tracking device is within the vicinity of the first area.

27. A method as claimed in any one of claims 18 to 26, wherein the step of determining the location of the remote device to within the first area comprises the use of cellular triangulation techniques.

28. A method as claimed in any one of claims 18 to 26, wherein the step of determining the location of the remote device to within the first area comprises the use of the home location register and/or visitor location register of a cellular communications network.

29. A method as claimed in any one of claims 18 to 28, wherein the circuit components of the remote device are integrally formed with circuit components of the object being protected.

30. A method as claimed in any one of claims 18 to 29, further comprising the step of guiding an operator to the remote device within the first area, using a visual indication provided to the operator on the mobile tracking device.

31. A method as claimed in any one of claims 18 to 30, further comprising the step of guiding an operator to the remote device within the first area, using an audible signal provided to the operator by the mobile tracking device.

32. A method as claimed in any one of claims 18 to 31, wherein the second radio signal is pulsed in order to save power consumption.

33. A method as claimed in any one of the preceding claims, wherein the signal detector of the mobile tracking unit comprises two or more antennas.
